# EUROPEAN PATENT APPLICATION

(11) **EP 4 496 151 A1**
(43) Date of publication of application: **22.01.2025**
(21) Application number: 23769779.2
(22) Date of filing: 14.03.2023
(51) Int. Cl.: H01R 31/06, H01R 13/58, H01B 7/04, H01B 7/00, B60R 16/02

(54) **ELECTRIC ENERGY TRANSMISSION ASSEMBLY AND VEHICLE**

(30) Priority: 14.03.2022 CN 202220548054 U
(71) Applicant: Jilin Zhong Ying High Technology Co., Ltd., Jilin 130028 (CN)
(72) Inventor: WANG, Chao, Changchun, Jilin 130028 (CN)
(74) Representative: Dehns
(86) International application number: PCT/CN2023/081357
(87) International publication number: WO 2023/174277

(57) **Abstract**

The present disclosure discloses an electric energy transmission assembly and a vehicle, including at least one electric connection skeleton and connectors arranged at two ends of the electric connection skeleton, and each of the connectors includes a connection terminal, the two ends of the electric connection skeleton are electrically connected to the connection terminals, and at least a part of the electric connection skeleton is a flexible conductor. According to the electric energy transmission assembly in the present disclosure, when the electric energy transmission assembly is assembled with the vehicle, the mounting difficulty can be reduced, and the working efficiency can be improved.

## Description

The present disclosure claims priority to Chinese Utility Model Patent Application No. 202220548054.1, filed on March 14, 2022, and entitled "Electric Energy Transmission Assembly and Vehicle", which is hereby incorporated by reference in its entirety.

### TECHNICAL FIELD

The present disclosure relates to the technical field of automotive electric appliances, and particular to an electric energy transmission assembly and a vehicle.

### BACKGROUND

Energy is supplemented and transmitted to a new energy battery of a new energy automotive by means of a high-voltage electric energy transmission assembly system. In addition to a charging socket, a high-voltage electric energy transmission assembly further includes a charging wire harness connector mechanism connected to a vehicle-mounted battery system, and a high-voltage wire harness is the most important unit in the high-voltage system of the new energy automotive.

For the traditional high-voltage wire harness, a rigid body or a flexible conductor is used as a high-voltage cable, and the tail end of the cable is connected to a plug-in terminal to be electrically connected to the vehicle-mounted battery system and other electric devices. With regard to the existing high-voltage cable, a rigid cable or a flexible cable is separately utilized to assemble and form a connector, so that the problems of difficulty in assembly or easiness in having abnormal sounds and the like exist.

Therefore, how to provide an electric energy transmission assembly that can reduce the assembly difficulty and reduce the production cost at the same time is an urgent technical problem in the field.

### SUMMARY

One purpose of the present disclosure is to provide a new technical solution of an electric energy transmission assembly.

According to a first aspect of the present disclosure, the electric energy transmission assembly is provided. The electric energy transmission assembly includes at least one electric connection skeleton and connectors arranged at two ends of the electric connection skeleton, and the connector includes a connection terminal, the two ends of the electric connection skeleton are electrically connected to the connection terminals, and at least a part of the electric connection skeleton includes a flexible conductor.

Optionally, the electric connection skeleton and the connection terminal are connected in a welding or crimping manner.

Optionally, the electric connection skeleton is a flexible conductor, and at least a part length of the flexible conductor forms a rigid body in a welding or crimping manner.

Optionally, the flexible conductor is a multi-core cable or a braided cable or a flexible flat cable laminated by a plurality of thin plates.

Optionally, the electric connection skeleton includes a plurality of conductor core sections sequentially connected end to end, and at least one of the conductor core sections is a flexible conductor.

Optionally, the conductor core sections, which are connected to the connection terminals, at the two ends of the electric connection skeleton are rigid bodies.

Optionally, the conductor core sections, which are connected to the connection terminals, at the two ends of the electric connection skeleton are flexible conductors.

Optionally, the conductor core section, which is connected to the connection terminal, at one end of the electric connection skeleton is a rigid body, and the conductor core section, which is connected to the connection terminal, at the other end of the electric connection skeleton is a flexible conductor.

Optionally, end portions of the two adjacent conductor core sections are connected in a crimping or welding or threaded connection or riveting or splicing manner.

Optionally, at least one of the conductor core sections is a rigid body, an end portion of the rigid conductor core section is provided with a connection portion of cylindrical or U-shaped or V-shaped, and an end portion of an adjacent rigid conductor core section or an end portion of an adjacent flexible conductor core section is placed into the connection portion and is connected in a crimping manner.

Optionally, at least one of the conductor core sections is a rigid body, an end portion of the rigid conductor core section is provided with a first flat portion, and the first flat portion is provided with a first through hole; and an end portion of an adjacent rigid conductor core section or an end portion of an adjacent flexible conductor core section is provided with a second flat portion, the second flat portion is provided with a second through hole, the first through hole and the second through hole are stacked, and a bolt or a rivet penetrates through the through holes for fixing.

Optionally, at least one of the conductor core sections is a rigid body, an end portion of the rigid conductor core section is provided with a screw, an end portion of an adjacent rigid conductor core section or an end portion of an adjacent flexible conductor core section is provided with an internal thread, and the screw is in threaded connection with the internal thread for fixing.

Optionally, adjacent conductor core sections are rigid bodies, end portions of the two adjacent rigid conductor core sections are respectively provided with a hinge shaft and a hinge pin, and the hinge shaft and the hinge pin are connected in a matched manner, so that the two adjacent conductor core sections are capable of being rotated relative to each other.

Optionally, adjacent conductor core sections are rigid bodies, an end portion of one of the rigid conductor core sections is provided with a spherical concave face, an end portion of the adjacent rigid conductor core section is provided with a spherical convex face, the spherical concave face covers the spherical convex face, and the spherical concave face and the spherical convex face are capable of being rotated relative to each other.

Optionally, the electric connection skeleton is sleeved with an insulating layer.

Optionally, the insulating layer is further sequentially sleeved with a shielding layer and an outer insulating layer.

Optionally, the flexible conductor and other parts of the electric connection skeleton have different shapes of cross sections.

Optionally, the flexible conductor and other parts of the electric connection skeleton have different cross sectional areas.

Optionally, a cross section of the electric connection skeleton is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

Optionally, a cross section of the electric connection skeleton is in a polygonal shape, and all corners of the polygonal shape are chamfered or rounded.

Optionally, one of the connectors is a charging socket.

According to a second aspect of the present disclosure, a vehicle is provided. The vehicle includes a vehicle body, an electric device, and the electric energy transmission assembly, and the connector is detachably fixed to the vehicle body or the electric device, and the electric connection skeleton is arranged and fixed along a contour of the vehicle body.

The electric energy transmission assembly according to the present disclosure has the following beneficial effects:
1. compared with a rigid cable, the electric energy transmission assembly according to the present disclosure has a flexible conductor provided at the position where bending is required, so that when the electric energy transmission assembly is assembled with the vehicle, the mounting difficulty can be reduced, and the working efficiency can be improved;
2. compared with a flexible cable, during connection with the terminals in the connectors and the connection terminal in the charging socket, reduction of the experience favorability of a customer due to abnormal sounds generated due to vibration at the joints of the flexible cable with the terminals can be avoided, and acceleration of damage to the joints of the cable with the connection terminals due to long-term vibration can be avoided; and
3. the cable is set to be of a mixed structure of the rigid cable and the flexible cable, so that an operator can conveniently assemble the cable on the vehicle body, a certain error can be allowed, the production cycle can be shortened, the production cost can be reduced, and meanwhile, the failure rate of products can be reduced.

Other features and advantages of the present disclosure will become clear through detailed description of embodiments of the present disclosure below with reference to the drawings.

### BRIEF DESCRIPTION OF THE DRAWINGS

Drawings incorporated in the specification and constituting a portion of the specification show embodiments of the present disclosure, and are used for explaining principles of the present disclosure together with the explanations thereof.
FIG. 1 is a structural schematic diagram of an electric energy transmission assembly according to the present disclosure;
FIG. 2 to FIG. 11 are axial section views of different embodiments of an electric connection skeleton according to the present disclosure;
FIG. 12 is a schematic diagram of a cross section of an electric connection skeleton with an outer side covered with an insulating layer according to the present disclosure; and
FIG. 13 is a schematic diagram of a cross section of an electric connection skeleton with an outer side covered with an insulating layer, a shielding layer and an outer insulating layer according to the present disclosure.

In the drawings, the reference numerals are as follows:
1. electric connection skeleton; 2. connector; 3. flexible conductor; 4. rigid body; 5. first through hole; 6. second through hole; 7. screw; 8. internal thread; 9. spherical convex face; 10. spherical concave face; 11. insulating layer; 12. shielding layer; 13. outer insulating layer; and 14. fixing member.

### DESCRIPTION OF THE EMBODIMENTS

Various embodiments of the present disclosure will now be described in detail with reference to the drawings. It should be noted that, unless otherwise specified, the relative arrangements, numeric expressions and values of components and steps set out in these embodiments do not limit the scope of the present disclosure.

Actually, the following description of at least one embodiment is only for the illustrative purpose, and shall not be construed as any limitation on the present disclosure or the application and use thereof.

For those of ordinary skill in the art, the known techniques, the known methods and the known devices may not be discussed in detail. However, under appropriate conditions, the techniques, methods and devices should be regarded as a part of the specification.

In all embodiments shown and discussed here, any specific value should be explained as exemplary only, and does not serve as a limitation. Therefore, other examples of the embodiments may have different values.

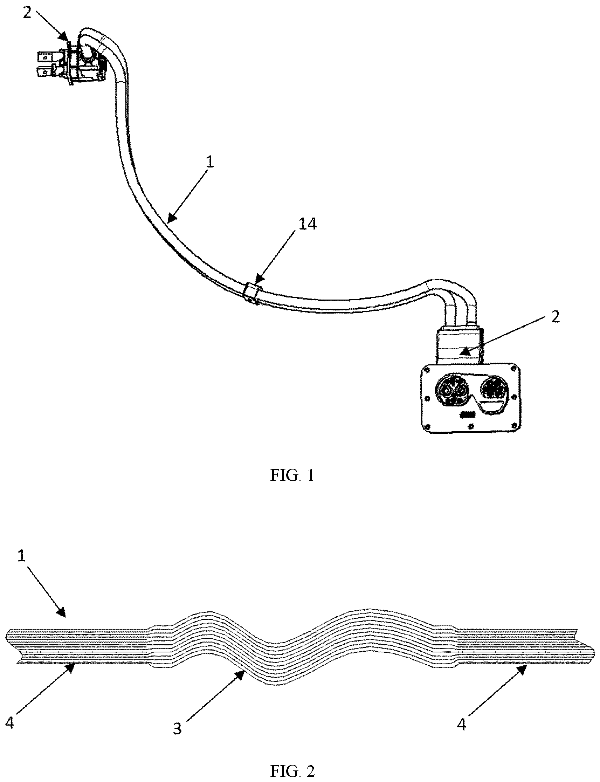

An electric energy transmission assembly according to the present disclosure, as shown in FIG. 1 to FIG. 11, includes at least one electric connection skeleton 1 and connectors 2 arranged at two ends of the electric connection skeleton 1, and the connector 2 includes a connection terminal, the two ends of the electric connection skeleton 1 are electrically connected to the connection terminals, and at least a part of the electric connection skeleton 1 is a flexible conductor 3.

During specific implementation, a cable is set to be of a mixed structure of the flexible cable and the rigid cable, so that an operator can conveniently assemble the cable on a vehicle body, a certain error can be allowed, the production cycle can be shortened, and the production cost can be reduced. Compared with a rigid cable, the electric energy transmission assembly according to the present disclosure has a flexible conductor 3 provided at the position where bending is required, so that when the electric energy transmission assembly is assembled with the vehicle, the mounting difficulty can be reduced, and the working efficiency can be improved. Compared with a flexible cable, during connection with the connection terminals in the connectors 2 and the connection terminal in a charging socket, reduction of the experience favorability of a customer due to abnormal sounds generated due to vibration at the joints of the flexible cable with the connection terminals can be avoided, acceleration of damage to the joints of the cable with the terminals due to long-term vibration can be avoided, and accidents can be reduced.

The flexible conductor 3 can ensure that a large bending angle is capable of being made on the electric connection skeleton 1, so that the skeleton is conveniently arranged in the vehicle body with large corners. Meanwhile, the flexible body can absorb the vibration of the electric connection skeleton 1, so that the vibration of the electric connection skeleton 1 cannot affect the connectors and other corresponding electric devices on the vehicle body.

During specific implementation, a fixing member 14 is arranged on a periphery of the electric connection skeleton 1, so that the electric connection skeleton 1 can be fixed to a vehicle shell of the electric vehicle, the vibration of the electric connection skeleton 1 can be prevented, and meanwhile, the electric connection skeleton 1 can be prevented from being misaligned.

In an embodiment of the electric energy transmission assembly according to the present disclosure, a material of the connection terminal contains copper or a copper alloy, and a material of the electric connection skeleton 1 contains pure aluminum or an aluminum alloy with the aluminum content being 90% or above.

During specific implementation, copper or copper alloys have high electric conductivity and are resistant to friction. In addition, electric connection portions of most existing electric devices are made of copper. Thus, the connection terminal made of the copper or copper alloy needs to be used for plugging and unplugging connection, and the connection terminal can be widely applied in various electric transmission scenes. The electric connection skeleton 1 made of aluminum or the aluminum alloy has the advantages of good rigidity, low mass and high transmission efficiency, and is particularly suitable for large-current transmission.

The pure aluminum or the aluminum alloy with the aluminum content being 90% or above is used to replace a copper conductor commonly used in the prior art, the density of aluminum is only one third of that of copper, according to the difference in the electrical solid conductor resistivity, on the premise of meeting the same electric conductivity, the wire diameter ratio of aluminum and copper are only 1.28 times, the weight of an aluminum material is only a half that of a copper material with the same current carrying capacity, thus under the condition of not increasing the cable loading space, the wire stock weight can be greatly reduced, and the light weight of a vehicle body can be achieved. In addition, an aluminum conductor (including pure aluminum or other alloy materials) which is low in specific gravity and low in material price replaces a copper conductor which is high in specific gravity and high in material price, so that the material cost and transportation cost can be reduced, and the production cost of the motor vehicle is saved. Exemplarily, the aluminum alloy is an aluminum copper alloy or an aluminum magnesium alloy or an aluminum lithium alloy or an aluminum manganese alloy or an aluminum zinc alloy or an aluminum silicon alloy which contain the aluminum content of 90% or above.

In an embodiment of the electric energy transmission assembly according to the present disclosure, the electric connection skeleton 1 and the connection terminal are connected in a welding or crimping manner.

During specific implementation, the electric connection skeleton 1 is connected to the connection terminal in the welding or crimping manner. The used welding manner includes one or more selected from a resistance welding manner, a friction welding manner, an ultrasonic welding manner, an arc welding manner, a laser welding manner, an electron beam welding manner, a pressure diffusion welding manner and a magnetic induction welding manner. Contact positions of the connection terminal and the electric connection skeleton 1 are fused and connected by means of concentrated heat or pressure, stable connection is achieved by means of the welding manner, connection of dissimilar materials can be achieved, and the electric conduction effect is better due to fusion of the contact positions.

The resistance welding manner refers to a method of using a large current to pass through a contact point between an electrode and a workpiece and generating heat by the contact resistance to achieve welding.

The friction welding manner refers to a method of using heat produced by rubbing of a contact face of the workpiece as a heat source and enabling the workpiece to be subjected to plastic deformation under the action of pressure so as to perform welding.

The ultrasonic welding manner means that high-frequency vibration waves are transmitted to surfaces of two objects to be welded and the surfaces of the two objects rub against each other, under the condition of pressurization, to achieve fusion between two molecular layers.

The arc welding manner means that an electric arc serves as a heat source, by means of the physical phenomenon of air discharge, electric energy is converted into heat and mechanical energy required by welding, so as to achieve the purpose of connecting metals, and main methods include a shielded metal arc welding method, a submerged arc welding method and a gas shielded welding method.

The laser welding manner is an efficient precision welding method using a laser beam with high energy density as a heat source.

The friction welding manner refers to a method of using heat produced by rubbing of a contact face of the workpiece as a heat source and enabling the workpiece to be subjected to plastic deformation under the action of pressure so as to perform welding.

The electron beam welding manner means an accelerated and focused electron beam bombards the welding face placed in the vacuum or non-vacuum so that a welded workpiece is melted for welding.

The pressure welding manner is a method for applying pressure to a welded workpiece so that connection faces make close contact to generate certain plastic deformation to complete welding.

The magnetic induction welding manner means two welded workpieces produce an instantaneous high-speed collision under the action of a strong pulsed magnetic field, surface layers of materials are subjected to high pressure waves, and thus atoms of the two materials meet within the atomic spacing, thereby forming stable metallurgical bonding on an interface. It is one kind of solid-state cold welding, by which conducting metals with similar or dissimilar properties can be welded together.

For the specific welding manner, the appropriate connection manner or connection manner combination is selected according to actual states of the electric connection skeleton 1 and the connection terminal, thereby achieving effective electric connection.

With regard to the crimping manner, crimping is a production technology for stamping the electric connection skeleton 1 and the connection terminal into a whole by means of a crimping machine after assembly. The crimping has an advantage of mass production, and a large number of products with stable quality can be quickly manufactured by means of an automatic crimping machine.

In an embodiment of the electric energy transmission assembly according to the present disclosure, as shown in FIG. 2, the electric connection skeleton 1 is a flexible conductor 3, and at least a part length of the flexible conductor 3 forms a rigid body 4 in a welding or crimping manner.

During specific implementation, at least a part of the flexible conductor 3 forms the rigid body 4 (that is, a rigid conductor), so that it can be fixed to the vehicle body conveniently when assembled on the vehicle body, abnormal sounds generated between the flexible conductor 3 and the vehicle shell or the connectors 2 connected to the two ends thereof due to vibration can be reduced, and breakage at the joints with the connection terminals can be avoided. Meanwhile, short-circuit phenomena and burning of the vehicle in serious cases, caused by the electric connection of the flexible conductor 3 with the vehicle body due to damage to an insulating layer led by frequent friction of a part of the flexible conductor 3 with the vehicle body are also avoided.

Further, as shown in FIG. 2 to FIG. 13, the flexible conductor 3 is a multi-core cable or a braided cable or a flexible busbar laminated by a plurality of thin plates.

During specific implementation, the flexible conductor 3 in the electric connection skeleton 1 can also be set to be the multi-core cable or the braided cable or the flexible flat cable laminated by the plurality of thin plates, so that it can be conveniently mounted on the vehicle body of the vehicle. At this time, the electric connection skeleton 1 has the excellent bendability and is convenient to mount and store.

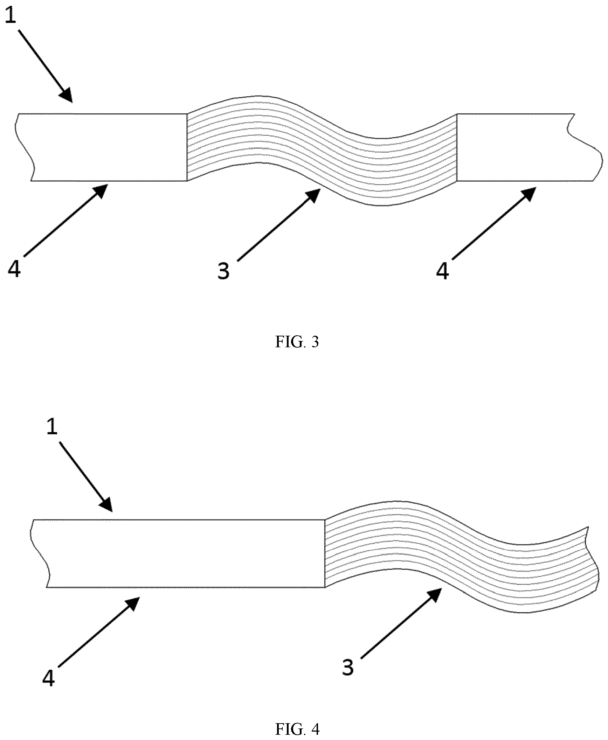

In an embodiment of the electric energy transmission assembly in the present disclosure, as shown in FIG. 3, FIG. 4, FIG. 6, FIG. 8 and FIG. 10, the electric connection skeleton 1 includes a plurality of conductor core sections sequentially connected end to end, and at least one of the conductor core sections is a flexible conductor 3.

During specific implementation, the electric connection skeleton 1 is set to include the conductor core sections sequentially connected end to end, according to preset conditions, the rigid body 4 is capable of being provided at the position where the rigid body 4 is needed, and the flexible conductor 3 can be arranged at the position to be bent, thereby facilitating assembly, storage and transportation.

Further, a material of at least one of the conductor core sections contains pure aluminum or an aluminum alloy with the aluminum content being 90% or above.

During specific implementation, the material of the conductor core sections contains aluminum. In the field of electrical connection, copper-leads are used for current conduction, and copper has the high electric conductivity and good ductility. However, as the copper price rises day by day, the material cost for using copper materials as the lead will be increased. Therefore, people begin to find substitutes of metal copper to reduce the cost. The content of metal aluminum in the earth's crust is about 7.73%, after optimization of the extraction technology, the price is relatively low, compared with copper, aluminum is light, and the electric conductivity of aluminum is only second to that of copper, so that aluminum can replace partial copper in the field of electrical connection. Therefore, replacing copper with aluminum is a development trend in the field of electrical connection of automotive. The electric connection skeleton 1 made of aluminum or the aluminum alloy has the advantages of good rigidity, low mass and high transmission efficiency, and is particularly suitable for large-current transmission.

The pure aluminum or the aluminum alloy with the aluminum content being 90% or above is used to replace a copper conductor core commonly used in the prior art, the density of aluminum is only one third of that of copper, according to the difference in the electrical solid conductor core resistivity, on the premise of meeting the same electric conductivity, the wire diameter ratio of aluminum and copper are only 1.28 times, the weight of an aluminum material is only a half that of a copper material with the same current carrying capacity, thus under the condition of not increasing the cable loading space, the wire stock weight can be greatly reduced, and the light weight of a vehicle body can be achieved. In addition, an aluminum conductor core (including an aluminum core or other alloy materials) which is low in specific gravity and low in material price replaces a copper conductor core which is high in specific gravity and high in material price, so that the material cost and transportation cost can be reduced, and the production cost of the motor vehicle is saved. Exemplarily, the aluminum alloy is an aluminum copper alloy or an aluminum magnesium alloy or an aluminum lithium alloy or an aluminum manganese alloy or an aluminum zinc alloy or an aluminum silicon alloy which contain the aluminum content of 90% or above.

Further, as shown in FIG. 2, FIG. 3, FIG. 6, FIG. 9 and FIG. 11, the conductor core sections, which are connected to the connection terminals, at the two ends of the electric connection skeleton 1 are rigid bodies 4.

During specific implementation, the conductor core sections, which are connected to the connection terminals, at the two ends of the electric connection skeleton 1 are set to be the rigid bodies 4, so that when the electric connection skeleton 1 are connected to the connection terminals at the two ends thereof, abnormal sounds generated due to vibration of the electric connection skeleton 1 can be avoided.

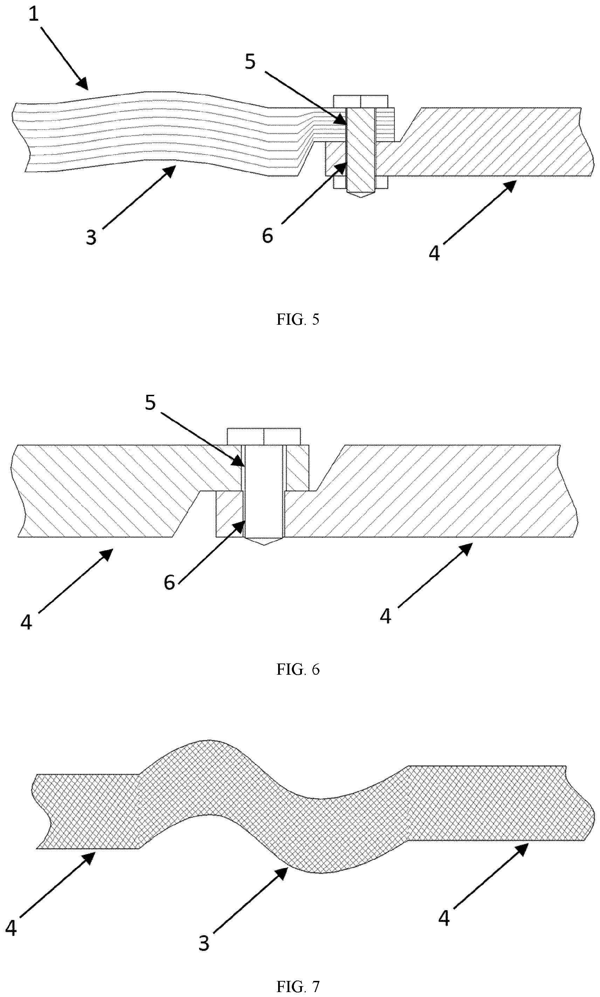

Further, as shown in FIG. 7, the conductor core sections, which are connected to the connection terminals, at the two ends of the electric connection skeleton 1 are flexible conductors 3.

During specific implementation, the conductor core sections, which are connected to the connection terminals, at the two ends of the electric connection skeleton 1 are set to be the flexible conductors 3, so that they can be more conveniently assembled with the vehicle shell, and the operability is high. Meanwhile, the requirement for the machining error of the electric connection skeleton 1 can also be reduced, and the flexible conductors 3 at tail ends can also be smoothly mounted on the electric device under the condition of large errors of rigid materials.

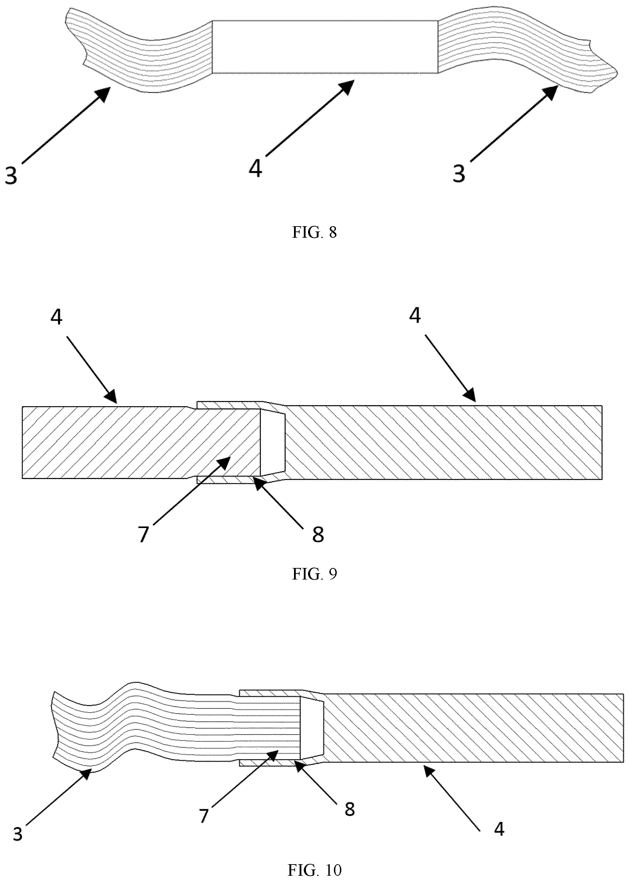

Further, as shown in FIG. 8, the conductor core section, which is connected to the connection terminal, at one end of the electric connection skeleton 1 may also be a rigid body 4, and the conductor core section, which is connected to the connection terminal, at the other end of the electric connection skeleton 1 may be a flexible conductor 3.

During specific implementation, the coordination of the flexible conductor 3 and the rigid body 4 in the electric connection skeleton 1 can be selected according to actual requirements.

Further, end portions of the two adjacent conductor core sections are connected in a crimping or welding or threaded connection or riveting or splicing manner.

During specific implementation, the end portions of the two adjacent conductor core sections are connected in the crimping or welding or threaded connection or riveting or splicing manner, which can be specifically selected according to actual requirements.

Further, as shown in FIG. 9 and FIG. 10, at least one of the conductor core sections is a rigid body 4, an end portion of the rigid conductor core section is provided with a connection portion of cylindrical or U-shaped or V-shaped, and an end portion of an adjacent rigid conductor core section or an end portion of an adjacent flexible conductor core section is placed into the connection portion and is connected in a crimping manner.

During specific implementation, the connection manner of the conductor core section being the rigid body 4 and the conductor core section being the flexible conductor 3 can be designed according to the actual requirements, and the two sections are capable of being connected in the crimping manner, so that the two sections can be connected more firmly and can be prevented from being disconnected.

Further, as shown in FIG. 5 and FIG. 6, at least one of the conductor core sections is a rigid body 4, an end portion of the rigid conductor core section is provided with a first flat portion, and the first flat portion is provided with a first through hole 5; and an end portion of the adjacent rigid conductor core section or an end portion of the adjacent flexible conductor core section is provided with a second flat portion, the second flat portion is provided with a second through hole 6, the first through hole 5 and the second through hole 6 are stacked, and a bolt or a rivet penetrates through the through holes for fixing.

During specific implementation, the first through hole 5 and the second through hole 6 are connected by means of the bolt or the rivet, the two through holes are capable of being rotated relative to each other, and the operator selects a required angle according to requirements, so that the operability is high.

Further, as shown in FIG. 9 and FIG. 10, at least one of the conductor core sections is a rigid body 4, an end portion of the rigid conductor core section is provided with a screw 7, an end portion of an adjacent rigid conductor core section or an end portion of an adjacent flexible conductor core section is provided with an internal thread 8, and the screw 7 is in threaded connection with the internal thread 8 for fixing.

During specific implementation, one of the end portion of the rigid conductor core section, and the end portions of an adjacent rigid conductor core section or an adjacent flexible conductor core section, can be provided with the screw 7, the other end portion can be provided with the internal thread 8, and the screw 7 is in threaded connection with the internal thread 8 for fixing, so that the two sections can be firmly connected and are capable of being rotated relative to each other, operation is facilitated during assembly of the electric vehicle, and the assembly difficulty is reduced.

Further, adjacent conductor core sections are rigid bodies 4, end portions of the two adjacent rigid conductor core sections are respectively provided with a hinge shaft and a hinge pin, and the hinge shaft and the hinge pin are connected in a matched manner, so that the two adjacent conductor core sections are capable of being rotated relative to each other.

During specific implementation, the two conductor core sections set to be the rigid bodies 4 are connected by means of the hinge shaft and the high pin, so that the two conductor core sections can be rotated relative to each other.

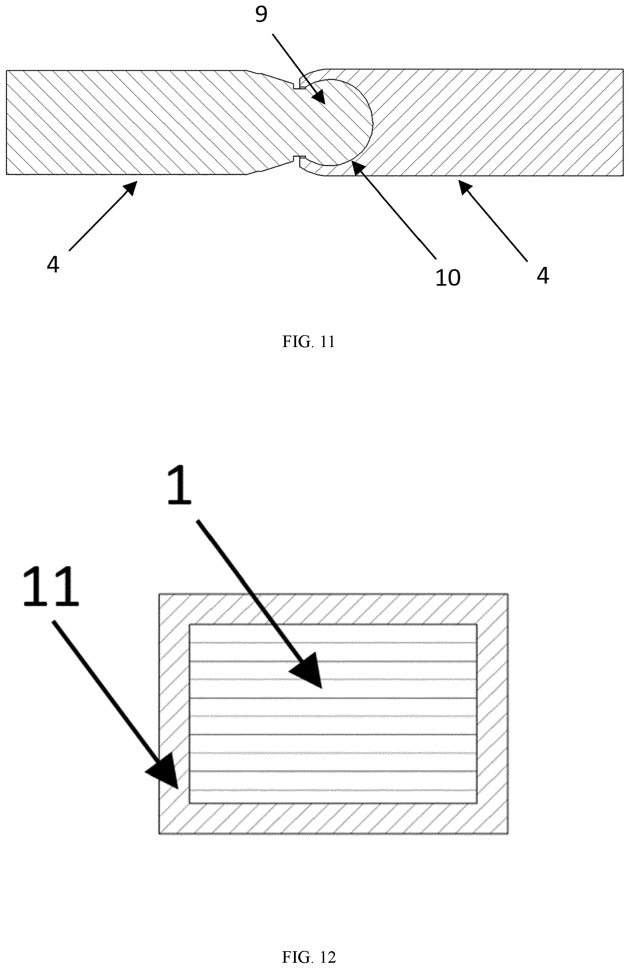

Further, as shown in FIG. 11, adjacent conductor core sections are rigid bodies 4, an end portion of one of the rigid conductor core sections is provided with a spherical concave face 10, an end portion of the adjacent rigid conductor core section is provided with a spherical convex face 9, the spherical concave face 10 covers the spherical convex face 9, and the spherical concave face and the spherical convex face are capable of being rotated relative to each other.

During specific implementation, the end portions of the adjacent conductor core sections are set to be the spherical convex face 9 and the spherical concave face 10 matched with each other, and one conductor core section is capable of being rotated by 360° relative to a circumferential direction of the other conductor core section and is capable of being rotated in an axial direction until an included angle between the two conductor core sections is smaller than 90°. In this embodiment, the rotation angle between the two adjacent conductor core sections is larger, so that when the operator assembles the electric energy transmission assembly on the electric vehicle, the operation is more flexible; in addition, the adjacent conductor core sections are the rigid bodies 4, when they are fixed to the vehicle shell, the operability is higher, and abnormal sounds are not generated easily.

Further, the electric connection skeleton 1 is sleeved with an insulating layer 11. As shown in FIG. 11, an outer side of the electric connection skeleton 1 formed by the flexible busbar laminated by the plurality of thin plates is sleeved with the insulating layer 11.

During specific implementation, outer sides of the electric connection skeletons 1 with various forms are sleeved with the insulating layers, thereby ensuring that during use, persons are prevented from getting an electric shock, short-circuiting caused by the contact of the positive electric connection skeleton 1 and the negative electric connection skeleton 1 is avoided, the safety of users is ensured, and the property loss is avoided.

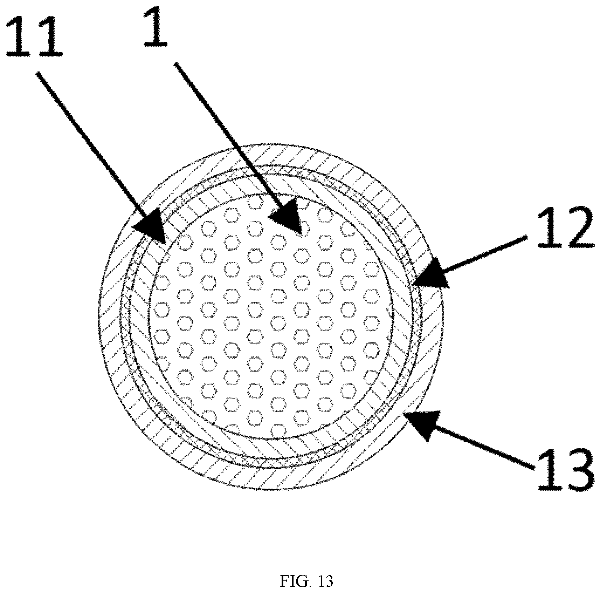

Further, as shown in FIG. 13, the insulating layer 11 is further sequentially sleeved with a shielding layer 12 and an outer insulating layer 13.

During specific implementation, through arrangement of the shielding layer 12, electromagnetic interference generated by the electric connection skeleton 1 during use can be shielded, thereby preventing the electric connection skeleton 1 from interfering with other instruments and devices during use. The shielding layer 12 can reduce the interference of the electromagnetic radiation generated by the electric connection skeleton 1 on other electric devices in the vehicle, and the shielding layer 12 is made of a conductor and needs to be grounded, so that the insulating layer 11 is arranged between the shielding layer 12 and the electric connection skeleton 1 to prevent the shielding layer 12 from making contact with the electric connection skeleton 1. The outer insulating layer 13 can further ensure the insulating effect of the electric connection skeleton 1, thereby avoiding accidents caused by short-circuiting of the electric connection skeleton 1 with the vehicle body.

During specific implementation, the specific form of the electric connection skeleton 1 in FIG. 12 and FIG. 13 is not particularly limited, and it can be the multi-core cable in any form and can also be a large-section rigid body.

In an embodiment of the electric energy transmission assembly according to the present disclosure, the flexible conductor 3 and other parts of the electric connection skeleton 1 have different shapes of cross sections.

Cross sectional areas of all sections of a common electrically conductive cable are required to be the same, so that the same current can be conducted. However, for the electric connection skeleton 1 with cross sections in different shapes being connected to each other, due to the different cross sectional areas of cavities in the sections in the different shapes, the cross sectional areas of the electric connection skeletons 1 in the different shapes are different. For example, for the multi-core electric connection skeleton 1 and the solid electric connection skeleton 1, gaps exist among wire cores of the multi-core electric connection skeleton 1, so that under the condition of the same conduction current, the cross sectional area of the multi-core electric connection skeleton 1 is greater than that of the solid electric connection skeleton 1.

During specific implementation, the shapes of cross sections of the flexible conductors 3 can be set to be different from those of other parts of the electric connection skeleton 1 apart from the flexible conductors 3 and can be specifically set according to requirements, thereby facilitating wiring on the vehicle.

In an embodiment of the electric energy transmission assembly according to the present disclosure, the flexible conductor 3 and other parts of the electric connection skeleton 1 have different cross sectional areas.

During specific implementation, the cross sectional area of the flexible conductor 3 can be set to be different from cross sectional areas of other parts of the electric connection skeleton 1 apart from the flexible conductor 3, and the respective cross sectional areas can be calculated according to the specific materials of the electric connection skeleton 1 and the flexible conductor 3, thereby ensuring the same conduction current at various positions of the electric connection skeleton 1, so as to meet the use conditions of the electric energy transmission assembly on the vehicle.

The cross sectional areas of all sections of the common electrically conductive cable are required to be the same, so that the same current can be conducted. However, for the flexible conductor 3 and other parts of the electric connection skeleton 1, due to the existence of the cavity in the flexible conductor 3, the cross sectional area of the flexible conductor 3 are different from those of other parts of the electric connection skeleton 1 that the same conductive current is conducted. For example, for the multi-core flexible conductor 3 and the solid electric connection skeleton 1, gaps exist among wire cores of the multi-core flexible conductor 3, so that under the condition of the same conduction current, the cross sectional area of the multi-core flexible conductor 3 is greater than the cross sectional area of the solid electric connection skeleton 1.

In an embodiment of the electric energy transmission assembly according to the present disclosure, a cross section of the electric connection skeleton 1 is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

During specific implementation, the shape of the cross section of the electric connection skeleton 1 can be designed specifically according to a wiring space in the vehicle, thereby facilitating wiring in the vehicle and assembly of the vehicle by the operator.

In an embodiment of the electric energy transmission assembly according to the present disclosure, a cross section of the electric connection skeleton 1 is in a polygonal shape, and all corners of the polygonal shape are chamfered or rounded.

During specific implementation, all the corners of the electric connection skeleton 1 with the cross section in the polygonal shape are chamfered or rounded, so that the connection between the electric connection skeleton 1 and the connection terminals can be facilitated, when being welded or crimped, the electric connection skeleton 1 are connected to the connection terminal more firmly, the contact area is larger, and the conduction current is better; heating and even burning accidents caused by excessively large resistance caused by an excessively small contact area between the electric connection skeleton 1 and the connection terminal during connection are avoided; and casualties and the property loss caused by scratching of the insulating layer by an edge formed by two adjacent sides of the polygonal shape during use can also be avoided.

In an embodiment of the electric energy transmission assembly according to the present disclosure, one of the connectors 2 is a charging socket. With the popularization of new energy automotive, devices and facilities for charging the new energy automotive are also developed. Rechargeable batteries of the new energy automotive have the requirement for fast charge, so that a charging socket assembly is needed. In the present disclosure, one of the connectors 2 is the charging socket and is connected to a charging gun, and the connector 2 at the other end is a high-voltage connector and is connected to the vehicle-mounted rechargeable battery, thereby achieving the purpose of charging the rechargeable battery.

A vehicle in the present disclosure includes a vehicle body, an electric device, and the electric energy transmission assembly, and the connector 2 is detachably fixed to the vehicle body or the electric device, and the electric connection skeleton 1 is arranged and fixed along a contour of the vehicle body.

Although some specific embodiments of the present disclosure are illustrated in detail by means of examples, those skilled in the art should understand that the above examples are only for the purpose of illustration, and are not intended to limit the scope of the present disclosure. Those skilled in the art should understand that the above embodiments can be amended without departing from the scope and spirit of the present disclosure. The scope of the present disclosure is defined by the appended claims.

## Claims

1. An electric energy transmission assembly, comprising at least one electric connection skeleton and connectors arranged at two ends of the electric connection skeleton, wherein the connector comprises a connection terminal, the two ends of the electric connection skeleton are electrically connected to the connection terminals, and at least a part of the electric connection skeleton comprises a flexible conductor.

2. The electric energy transmission assembly according to claim 1, wherein the electric connection skeleton and the connection terminal are connected in a welding or crimping manner.

3. The electric energy transmission assembly according to claim 1, wherein the electric connection skeleton is a flexible conductor, and at least a part length of the flexible conductor forms a rigid body in a welding or crimping manner.

4. The electric energy transmission assembly according to claim 3, wherein the flexible conductor is a multi-core cable or a braided cable or a flexible busbar laminated by a plurality of thin plates.

5. The electric energy transmission assembly according to claim 1, wherein the electric connection skeleton comprises a plurality of conductor core sections sequentially connected end to end, and at least one of the conductor core sections is a flexible conductor.

6. The electric energy transmission assembly according to claim 5, wherein the conductor core sections, which are connected to the connection terminals, at the two ends of the electric connection skeleton are rigid bodies.

7. The electric energy transmission assembly according to claim 5, wherein the conductor core sections, which are connected to the connection terminals, at the two ends of the electric connection skeleton are flexible conductors.

8. The electric energy transmission assembly according to claim 5, wherein the conductor core section, which is connected to the connection terminal, at one end of the electric connection skeleton is a rigid body, and the conductor core section, which is connected to the connection terminal, at the other end of the electric connection skeleton is a flexible conductor.

9. The electric energy transmission assembly according to claim 5, wherein end portions of the two adjacent conductor core sections are connected in a crimping or welding or threaded connection or riveting or splicing manner.

10. The electric energy transmission assembly according to claim 5, wherein at least one of the conductor core sections is a rigid body, an end portion of the rigid conductor core section is provided with a connection portion of cylindrical or U-shaped or V-shaped, and an end portion of an adjacent rigid conductor core section or an end portion of an adjacent flexible conductor core section is placed into the connection portion and is connected in a crimping manner.

11. The electric energy transmission assembly according to claim 5, wherein at least one of the conductor core sections is a rigid body, an end portion of the rigid conductor core section is provided with a first flat portion, and the first flat portion is provided with a first through hole; and an end portion of an adjacent rigid conductor core section or an end portion of an adjacent flexible conductor core section is provided with a second flat portion, the second flat portion is provided with a second through hole, the first through hole and the second through hole are stacked, and a bolt or a rivet penetrates through the through holes for fixing.

12. The electric energy transmission assembly according to claim 5, wherein at least one of the conductor core sections is a rigid body, an end portion of the rigid conductor core section is provided with a screw, an end portion of an adjacent rigid conductor core section or an end portion of an adjacent flexible conductor core section is provided with an internal thread, and the screw is in threaded connection with the internal thread for fixing.

13. The electric energy transmission assembly according to claim 5, wherein adjacent conductor core sections are rigid bodies, end portions of the two adjacent rigid conductor core sections are respectively provided with a hinge shaft and a hinge pin, and the hinge shaft and the hinge pin are connected in a matched manner, so that the two adjacent conductor core sections are capable of being rotated relative to each other.

14. The electric energy transmission assembly according to claim 5, wherein adjacent conductor core sections are rigid bodies, an end portion of one of the rigid conductor core sections is provided with a spherical concave face, an end portion of the adjacent rigid conductor core section is provided with a spherical convex face, the spherical concave face covers the spherical convex face, and the spherical concave face and the spherical convex face are capable of being rotated relative to each other.

15. The electric energy transmission assembly according to claim 1, wherein the electric connection skeleton is sleeved with an insulating layer.

16. The electric energy transmission assembly according to claim 15, wherein the insulating layer is further sequentially sleeved with a shielding layer and an outer insulating layer.

17. The electric energy transmission assembly according to claim 1, wherein the flexible conductor and other parts of the electric connection skeleton have different shapes of cross sections.

18. The electric energy transmission assembly according to claim 1, wherein the flexible conductor and other parts of the electric connection skeleton have different cross sectional areas.

19. The electric energy transmission assembly according to claim 1, wherein a cross section of the electric connection skeleton is in one or more selected from a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a U shape, a V shape, a W shape, an X shape, a Y shape, a Z shape, a P shape, a semi-arc shape, an arc shape and a wavy shape.

20. The electric energy transmission assembly according to claim 1, wherein a cross section of the electric connection skeleton is in a polygonal shape, and all corners of the polygonal shape are chamfered or rounded.

21. The electric energy transmission assembly according to claim 1, wherein one of the connectors is a charging socket.

22. A vehicle, comprising a vehicle body, an electric device, and the electric energy transmission assembly according to any one of claims 1 to 21, wherein the connector is detachably fixed to the vehicle body or the electric device, and the electric connection skeleton is arranged and fixed along a contour of the vehicle body.
